# EUROPEAN PATENT SPECIFICATION

(11) **EP 1 177 922 B1**
(45) Date of publication and mention of the grant of the patent: **14.01.2004**
(21) Application number: 01117534.6
(22) Date of filing: 20.07.2001
(51) Int. Cl.: B60H 1/00, F04D 29/44

(54) **Air conditioning apparatus for vehicles**
Fahrzeugklimaanlage
Dispositif de climatisation pour véhicule

(30) Priority: 04.08.2000 JP 2000236915
(43) Date of publication of application: 06.02.2002
(73) Proprietor: Sanden Corporation, Isesaki-shi, Gunma 372-8502 (JP)
(72) Inventor: Noguchi, Masahiro, Isesaki-shi, Gunma 372-8502 (JP)
(74) Representative: Prüfer, Lutz H., Dipl.-Phys.

(56) References cited:
- FR-A- 2 781 531
- GB-A- 2 340 550
- US-A- 2 532 882
- PATENT ABSTRACTS OF JAPAN vol. 2000, no. 01, 31 January 2000 (2000-01-31) & JP 11 287471 A (DENSO CORP), 19 October 1999 (1999-10-19) & US 6 178 764 B1 (TANAKA ET AL.) 30 January 2001 (2001-01-30)

## Description

The present invention relates to an air conditioning apparatus for vehicles having a scroll casing of a blower with a volute air duct and a heat exchanger unit, and more particularly, to an optimum air conditioning apparatus for an automotive air conditioning apparatus.

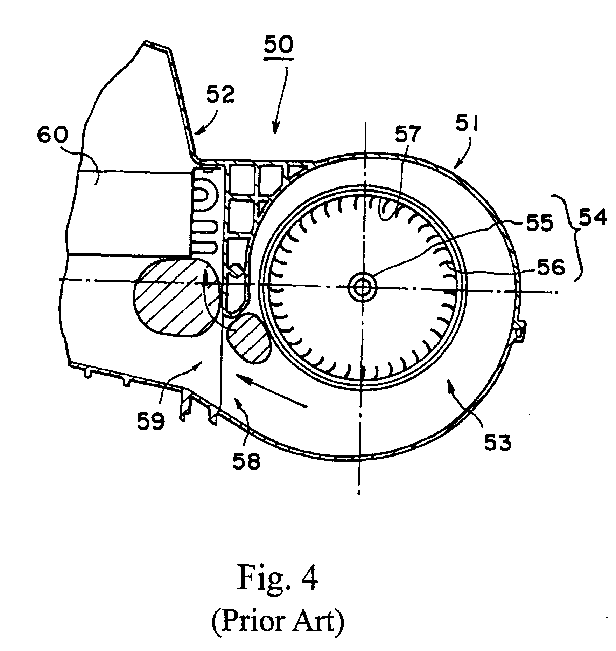

Referring to **Fig. 4**, an air conditioning apparatus 50 for vehicles, which comprises a scroll casing 51 and a heat exchanger unit 52, is present. A volute air duct 53 is formed within scroll casing 51. A centrifugal-type forward curved fan 54 is disposed in scroll casing 51. Forward curved fan 54 has a rotating shaft 55 and a number of curved vanes 56, which are disposed around rotating shaft 55. The air sucked from an air suction port 57 of scroll casing 51 is sent to radially outward directions by forward curved fan 54. Thereafter, pressure within air duct 53 is sufficiently increased, and the air is discharged to an interior of heat exchanger unit 52 through a discharge port 58 and an introduction port 59 of heat exchange unit 52. Then, the air reaches a heat exchanger 60, and a heat exchange is carried out between heat exchanger 60 and the passing air.

In air conditioning apparatus 50, however, forward curved fan 54 is operated under a wide range between high pressure loss operation and low pressure loss operation. In high pressure loss operation, the large amount of the air is sent to an inside of a compartment of a vehicle. Contrarily, in low pressure loss operation,'the small amount of the air is sent to the inside of the compartment of the vehicle. Thus, the flow condition of the air within air conditioning apparatus 50 may vary. Particularly in the high pressure loss operation, because the amount of the air flow passing discharge port 58 of seroll casing 51 increases, the air may flow backward to air duct 53. Because a cross-sectional area of introduction port 59 of heat exchanger unit 52 is formed to be greater than an opening of discharge port 58, in a hatched area of **Fig. 4** (i.e., the locations corresponding to radially inward areas of introduction port 59 and discharge port 58), a turbulent flow or a stagnation of the air may occur. As a result, a back flow or a circulating flow may occur. When the back flow or circulating flow occurs, noise (particularly in a range of low frequency area, e.g., in a range between 50Hz and 2000Hz), pulsating noise, and the decrease of blowing efficiency may occur. Noise, pulsating noise, and the decrease of blowing efficiency may be reduced or eliminated to some extent by changing the design of curved vane 56 and air duct 53. However, there is a limit in this solving method. Moreover, because a design freedom of curved vane 56 and air duct 53 is decreased in this solving method, miniaturization of air conditioning apparatus 50 may not be achieved.
JP11287471 discloses the preamble portion of the invention claimed in claim 1. US6178764 corresponds to JP11287471 but is published after the priority date of the present invention. FR2781531 and GB2340550 disclose air conditioning apparatuses having air-straightening walls.

Accordingly, it is an object of the present invention to provide an air conditioning apparatus for vehicles which has improved noise characteristics and blowing efficiency in a wide range between high pressure loss operation and low pressure loss operation, particularly in high pressure loss operation by preventing the occurrence of noise and the decrease of blowing efficiency, when compared with a known air conditioning apparatus for vehicles.

The object is solved by the air conditioning apparatus for vehicles of claim 1.

Objects, features, and advantages of embodiments of this invention will be apparent to persons of ordinary skill in the art from the following detailed description of the invention and the accompanying drawings.

In the drawings:
**Fig. 1** is a vertical sectional view of an air conditioning apparatus for vehicles, according to an embodiment of the present invention;
**Fig. 2** is an enlarged cross-sectional view of an air-straightening vane depicted in **Fig. 1;**
**Fig. 3** is a graph showing a relationship between frequency and noise level of the air conditioning apparatus for vehicles of the present invention and a known air conditioning apparatus for vehicles; and
**Fig. 4** is a vertical sectional view of an existing air conditioning apparatus for vehicles.

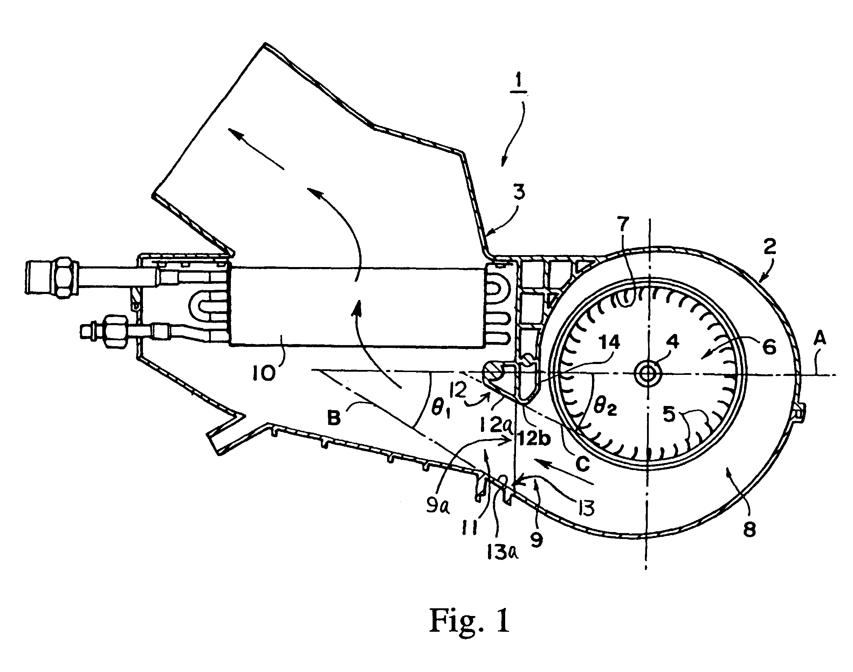

**Fig. 1** depicts an air conditioning apparatus for vehicles, according to an embodiment of the present invention. Referring to **Fig. 1,** an air conditioning apparatus 1 includes a scroll casing 2 and a heat exchanger unit 3. A volute air duct 8 is formed within scroll casing 2. A centrifugal-type forward curved fan 6 is disposed in scroll casing 2. Forward curved fan 6 has a number of curved vanes 5, which are disposed around a rotating shaft 4. An inside air introduction port 7 is formed in the top surface of scroll casing 2. The air sucked from air introduction port 7 is sent radially outward directions by forward curved fan 6, and is introduced into air duct 8. The air flowing to air duct 8 is introduced into heat exchanger unit 3 through an air introduction port 11 thereof communicating with an air discharge port 9 of scroll casing 2. Then, the air reaches a heat exchanger 10, e.g., an evaporator, and a heat exchange is carried out between heat exchanger 10 and the passing air.

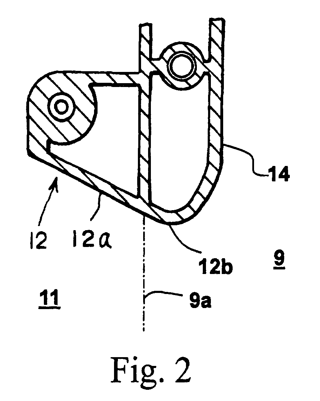

An air-straightening wall 12 is disposed at the position of air introduction port 11 of heat exchanger unit 3 which is corresponding to a radially inward area of air discharge port 9 of scroll casing 2. Air-straightening wall 12 extends toward heat exchanger 10. As shown in **Fig. 1**, when an angle θ₁ is defined as an angle between a plane A (expressed by a horizontal line in **Fig. 1)** which passes through a central axis of rotating shaft 4 and is perpendicular to an air discharge port plane 9a (of **Fig. 1),** and a plane B extending from an end of the outer wall of the scroll casing 2 into the direction of the end section of the outer wall, and when an angle θ₂ is defined as an angle between plane A and a plane C extended from a surface 12a of air-straightening wall 12 along the direction thereof, air-straightening wall 12 is designed to satisfy an inequality θ₁ ≥ θ₂. With reference to **Fig. 2,** surface 12a of air-straightening wall 12 communicates continuously with a radially inward surface 14 of air discharge port 9; and extends across air discharge port plane 9a in a width direction of the apparatus (perpendicular to the paper). Further, surface 12a of air-straightening wall 12 is formed to have a well defined angle θ₂ with respect to plane A. Therefore, a beginning section 12b of surface 12a is located at a scroll casing 2 side with respect to air discharge port plane 9a. If a relationship between angle θ₁ and angle θ₂ is θ₁ < θ₂ and the difference between angle θ₁ and angle θ₂ becomes large, an opening of air discharge port 9 becomes smaller, or an air flow at air discharge port 9 rapidly increases. As a result, blow efficiency may decrease due to a loss of pressure.

In this embodiment of the present invention, air-straightening wall 12 is disposed at an area, where back flow or the like may occur accompanied by the stagnation of the air particularly in high pressure loss operation, i.e., air-straightening wall 12 is disposed at the position of air introduction port 11 of heat exchanger unit 3 which is corresponding to a radially inward area of air discharge port 9 of scroll casing 2. Further, air-straightening wall 12 extends toward heat exchanger 10. By this structure, the air discharged from air discharge port 9 is rectified by air-straightening wall 12, and the directivity of air flow toward heat exchanger 10 is given by air-straightening wall 12. Consequently, the stagnation of the air may be prevented, and back flow or circulating flow may be suppressed. As a result, noise, pulsating noise, and the decrease of blowing efficiency of air conditioning apparatus 1 may be effectively reduced or eliminated.

As described above, in this embodiment, air-straightening wall 12 is made so as to satisfy the inequality θ₁ ≥ θ₂. Therefore, pressure loss of the air, which is discharged from air discharge port 9, may be suppressed to a great extent. As a result, the decrease of blowing efficiency of air conditioning apparatus 1 may be effectively prevented.

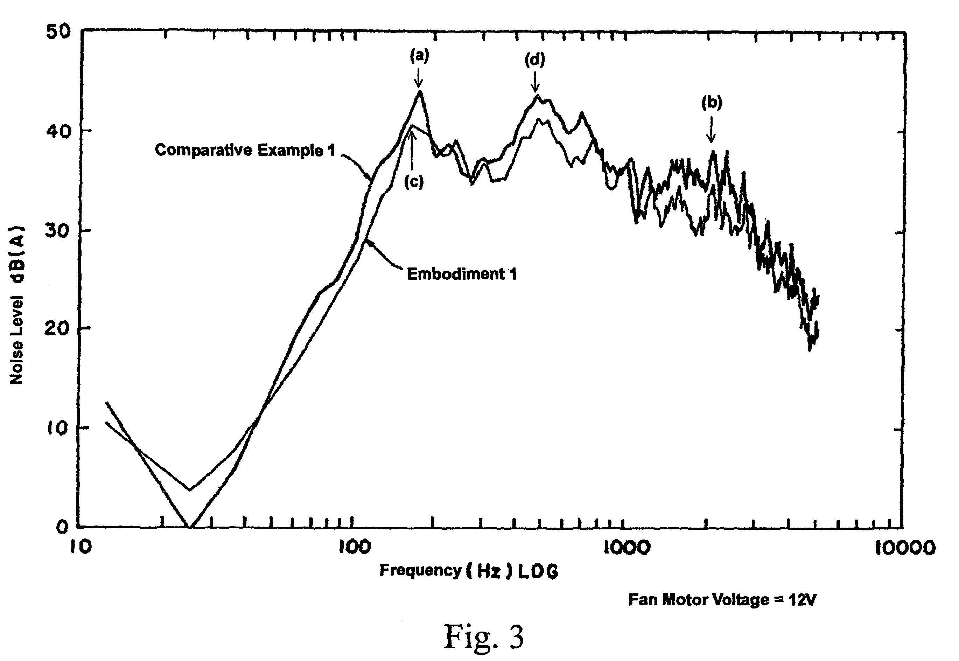

**Fig. 3** is a graph showing a relationship between frequency and noise level of the embodiment of the present invention of the air conditioning apparatus for vehicles and a known air conditioning apparatus for vehicles. Referring to **Fig. 3,** the graph is explained.

### Embodiment 1

Air-straightening wall 12 is disposed in the air conditioning apparatus. Air-straightening wall 12 was disposed so as to satisfy the following equations, and the noise level was measured.
Angle θ₁ = 31.3°
Angle θ₂ = 27.8°

### Comparative example 1

The noise level of the known air conditioning apparatus was measured.

The difference between embodiment 1 and comparative example 1 is with or without air-straightening wall 12, and the all other conditions of embodiment 1 and comparative example 1, such as a configuration of scroll casing 2, a fan motor, and the fan motor voltage are set in the same way.

As shown in **Fig. 3**, each peak points of noise level of embodiment 1 and comparative example 1, respectively, occur at about 200Hz where the noise due to low pressure loss operation is conspicuous (a), at about 2100Hz where the noise due to air passing through curved vanes 5 is conspicuous (b), at about 175Hz and 500Hz where the noise due to high pressure loss operation is conspicuous (c, d). Each peak points of noise level of embodiment 1 are lower than that of comparative example 1. Therefore, noise of embodiment 1 is reduced compared with that of comparative example 1. Further, the peak point of noise level of embodiment 1 at about 2100Hz is lower than that of comparative example 1. This is because the air at air discharge port 9 is rectified by air-straightening wall 12. This shows rectifying effect of air straightening wall 12.

As described above, with respect to an embodiment of the present invention of the air conditioning apparatus for vehicles, because air-straightening wall 12 rectifying the air discharged from air discharge port 9 is disposed in air conditioning apparatus I, the occurrence of back flow, circulating flow, and noise may be effectively reduced or eliminated.

In practice, the angle θ₁ may range from 30° to 32°, and angle θ₂ may range from 26° to 28°.

## Claims

1. An air conditioning apparatus (1) for vehicles comprising:
a scroll casing (2) of a blower having a volute air duct (8);
a heat exchanger unit (3) connected to said scroll casing (2), said heat exchanger unit (3) having an air introduction port (11) communicating with an air discharge port (9) of said scroll casing (2); and
an air-straightening wall (12) straightening the air discharged from said air discharge port (9), said air-straightening wall (12) being disposed at a position corresponding to a radially inward position of both said air discharge port (9) of said scroll casing (2) and said air introduction port (11) of said heat exchanger unit (3),
wherein if an angle θ₁ is defined as an angle between a first plane (A) passing through a central axis of a rotating shaft (4) of said blower and being perpendicular to an air discharge port plane (9a) and a second plane (B) extended from an end wall at said air discharge port (9) of said scroll casing (2), and if an angle θ₂ is defined as an angle between said first plane (A) and a third plane (C) extended from a surface (12a) of said air-straightening wall (12) parallel thereto, said air-straightening wall (12) is made so as to satisfy an inequality θ₁ ≥ θ₂, and wherein said surface (12a) of said air-straightening wall (12) and an interior surface of a wall corresponding to a radially inward position of said air discharge port (9) being continuously adjacent and extending across said air discharge port plane (9a) substantially in width direction of said apparatus (1), **characterized in that** the range of said angle θ₁ is from 30° to 32°, and wherein the range of said angle θ₂ is from 26° to 28°.

2. The air conditioning apparatus according to claim 1, wherein said air-straightening wall (12) is integrally formed with said heat exchanger unit (3).

## Patentansprüche

1. Klimaanlage (1) für Fahrzeuge, aufweisend:
ein Spiralgehäuse (2) eines Gebläses, das eine Schneckenluftführung (8) besitzt;
eine Wärmetauschereinheit (3), die mit dem Spiralgehäuse (2) verbunden ist, wobei die Wärmetauschereinheit (3) eine Lufteinführungsöffnung (11) besitzt, die mit einer Luftausstoßöffnung (9) des Spiralgehäuses (2) verbunden ist; und
eine Luftbegradigungswand (12), die die Luft, die von der Luftausstoßöffnung (9) ausgestoßen wird, begradigt, wobei die Luftbegradigungswand (12) an einer Position angeordnet ist, die einer radial einwärts gerichteten Position sowohl von der Luftausstoßöffnung (9) des Spiralgehäuses (2) als auch der Lufteinführöffnung (11) der Wärmetauschereinheit (3) entspricht, wobei dann, wenn ein Winkel θ1 als ein Winkel zwischen einer ersten Ebene (A), die durch eine Mittelachse einer Drehwelle (4) des Gebläses geht und senkrecht zu einer Luftausstoßöffnungsebene (9a) steht, und einer zweiten Ebene (B), die sich von einer Abschlußwand an der Luftausstoßöffnung (9) des Spiralgehäuses (2) erstreckt, definiert wird, und wenn ein Winkel θ2 als ein Winkel zwischen der ersten Ebene (A) und einer dritten Ebene (C), die sich von einer Oberfläche (12a) der Luftbegradigungswand (12) parallel hierzu erstreckt, definiert wird, die Luftbegradigungswand (12) so gemacht wird, daß sie der Ungleichung θ1 ≥ θ2 Genüge leistet, und wobei die Oberfläche (12a) der Luftbegradigungswand (12) und eine innere Oberfläche einer Wand, die einer radial einwärts gerichteten Position der Luftausstoßöffnung (9) entspricht, kontinuierlich benachbart zueinander liegen und sich quer zur Luftausstoßöffnungsebene (9a) im wesentlichen in einer Breitenrichtung der Vorrichtung (1) erstrecken, **dadurch gekennzeichnet, daß** der Bereich des Winkels θ1 von 30° bis 32° reicht, und wobei der Bereich des Winkels θ2 von 26° bis 28° reicht.

2. Klimaanlage gemäß Anspruch 1, wobei die Luftbegradigungswand (12) einstückig mit der Wärmetauschereinheit (3) ausgebildet ist.

## Revendications

1. Dispositif de climatisation (1) pour véhicules comprenant :
un corps en spirale (2) d'un ventilateur présentant un conduit d'air en volute (8) ;
une unité formant échangeur de chaleur (3) reliée audit corps en spirale (2), ladite unité formant échangeur de chaleur (3) présentant un orifice d'introduction d'air (11) communicant avec un orifice d'évacuation d'air (9) dudit corps en spirale (2) ; et
une paroi de redressement d'air (12) redressant l'air évacué depuis ledit orifice d'évacuation d'air (9), ladite paroi de redressement d'air (12) étant disposée à une position correspondant à une position intérieure radiale à la fois de l'orifice d'évacuation d'air (9) dudit corps en spirale (2) et dudit orifice d'introduction d'air (11) de ladite unité formant échangeur de chaleur (3),
dans lequel, si un angle θ1 est défini en tant qu'angle entre un premier plan (A) passant par un axe central d'un arbre de rotation (4) dudit ventilateur et étant perpendiculaire à un plan d'orifice d'évacuation d'air (9a) et un second plan (B) étendu depuis une paroi d'extrémité sur ledit orifice d'évacuation d'air (9) dudit corps en spirale (2), et si un angle θ2 est défini en tant qu'angle entre ledit premier plan (A) et un troisième plan (C) étendu depuis une surface (12a) de ladite paroi de redressement d'air (12) qui y est parallèle, ladite paroi de redressement d'air (12) est réalisée de manière à satisfaire à une inégalité θ1 ≥ θ2, et dans lequel ladite surface (12a) de ladite paroi de redressement d'air (12) et une surface intérieure d'une paroi correspondant à une position intérieure radiale dudit orifice d'évacuation d'air (9) étant continuellement adjacente et s'étendant à travers ledit plan d'orifice d'évacuation d'air (9a) sensiblement dans le sens de la largeur dudit dispositif (1), **caractérisé en ce que** l'intervalle dudit angle θ1 est de l'ordre de 30° à 32°, et dans lequel l'intervalle dudit angle θ2 est de l'ordre de 26° à 28°.

2. Dispositif de climatisation selon la revendication 1, dans lequel ladite paroi de redressement d'air (12) est formée d'un seul tenant avec ladite unité formant échangeur de chaleur (3).
